# EUROPÄISCHE PATENTSCHRIFT

(11) **EP 2 925 556 B1**
(45) Veröffentlichungstag und Bekanntmachung des Hinweises auf die Patenterteilung: **01.02.2017**
(21) Anmeldenummer: 13795487.1
(22) Anmeldetag: 25.11.2013
(51) Int. Cl.: B60L 11/18, B60L 3/00, H02J 3/14, H02J 7/02, H02J 7/04, H02J 9/00, H02J 13/00, H02J 3/12, H02J 3/00

(54) **LADEN EINES ELEKTRISCHEN ENERGIESPEICHERS EINES ELEKTROFAHRZEUGS AN EINER STECKDOSE MIT REDUKTION DES LADESTROMS NACH AUSFALL UND WIEDEREINSETZEN DER STROMVERSORGUNG**
CHARGING AN ELECTRICAL ENERGY STORE ON AN ELECTRIC VEHICLE AT A SOCKET WITH REDUCTION OF THE CHARGING CURRENT AFTER FAILURE AND RESTORATION OF THE POWER SUPPLY
CHARGE D'UN ACCUMULATEUR D'ÉNERGIE ÉLECTRIQUE D'UN VÉHICULE ÉLECTRIQUE À UNE PRISE AVEC RÉDUCTION DU COURANT DE CHARGE APRÈS COUPURE ET REPRISE DE L'ALIMENTATION EN COURANT

(30) Priorität: 28.11.2012 DE 102012221807
(43) Veröffentlichungstag der Anmeldung: 07.10.2015
(73) Patentinhaber: Bayerische Motoren Werke Aktiengesellschaft, 80809 München (DE)
(72) Erfinder: HOFER, Gerhard, 80798 München (DE); VON REUSNER, Detlef, 85622 Feldkirchen (DE)
(86) Internationale Anmeldenummer: PCT/EP2013/074579
(87) Internationale Veröffentlichungsnummer: WO 2014/082952

(56) Entgegenhaltungen:
- EP-A2- 2 511 125
- EP-A2- 2 518 852
- WO-A1-2011/155206
- US-A1- 2012 139 490

## Beschreibung

Die Erfindung betrifft das Laden eines elektrischen Energiespeichers eines Elektrofahrzeugs an einer zur Stromversorgung dienenden Steckdose, insbesondere an einer Haushaltssteckdose.

Unter Elektrofahrzeugen wird nachfolgend jedes Fahrzeug verstanden, das von einem Elektromotor angetrieben wird und dessen Elektromotor die elektrische Energie aus einem elektrischen Energiespeicher (beispielsweise einer elektrischen Batterie oder einem elektrischen Kondensator) erhält, der an einer fahrzeugexternen elektrischen Ladequelle ladbar ist, beispielsweise an einer an ein Stromnetz angeschlossenen Haushaltssteckdose. Neben rein elektrisch angetriebenen Elektrofahrzeugen ohne Verbrennungsmotor werden hierunter auch Elektrofahrzeuge mit Range-Extender und Plug-In-Hybrid-Fahrzeuge verstanden.

Gewöhnliche 1-phasige Haushaltssteckdosen mit beispielsweise 230-V-Wechselspannung (beispielsweise in Europa) oder 120-V-Wechselspannung (beispielsweise in Nordamerika) können im Unterschied zu Industriesteckdosen, Ladestationen oder Wallboxen meist nur einen geringen maximalen Ladestrom liefern, beispielsweise maximal 16 A. Bei Überschreiten der Strombelastbarkeit spricht typischerweise eine Überstromsicherung an, die den Stromkreis unterbricht.

In den Normen IEC 61851-1:2010 und SAE-J1772 (Januar 2010) zur Standardisierung des Ladens von Elektrofahrzeugen ist beschrieben, dass der maximale Ladestrom, den das Fahrzeug über die externe Ladequelle beziehen kann, dem Fahrzeug über das Pulsweitenverhältnis des in der Stromversorgungseinrichtung (EV supply equipment) generierten pulsweitenmodulierten Pilotsignals mitgeteilt wird, beispielsweise 13 A bei einem bestimmten Pulsweitenverhältnis. Bei Kenntnis des maximalen Ladestroms (d. h. des verfügbaren Ladestroms) kann das Fahrzeug den tatsächlichen Ladestrom hierauf anpassen.

Im Fall des Ladens an einer Steckdose wird das den maximalen Ladestrom angebende Pilotsignal in einem sogenannten ladeleitungsintegrierten Steuergerät (in-cable control box) erzeugt, das Teil der Ladeleitungsgarnitur ist.

Gemäß IEC 61851-1:2010 kann durch den Wert eines Widerstands in der Ladeleitungsgarnitur die Strombelastbarkeit der Ladeleitungsgarnitur kodiert werden, beispielsweise 1,5 kΩ bei 13 A Strombelastbarkeit und 220 Ω bei 32 A Strombelastbarkeit. Dieser Widerstand wird auch als Proximity-Widerstand bezeichnet, da dieser sich zwischen dem Annäherungskontakt (Proximity-Kontakt) und dem Erdungskontakt in der Fahrzeugkupplung befindet, die mit dem Fahrzeug verbunden wird.

Es können mit den bislang in den Normen definierten Mechanismen zur Ladestrombegrenzung Ladeleitungsgarnituren für unterschiedliche Haushaltssteckdosentypen mit unterschiedlichen Stromtragfähigkeiten realisiert werden.

Viele Elektrofahrzeuge können mit Hilfe einer mobilen Ladeleitungsgarnitur in an einer Haushaltssteckdose geladen werden, die Teil eines mit einer Überstromsicherung (beispielsweise ein 16-A-Leistungsschutzschalter) gesicherten Stromkreis ist, der neben der elektrischen Last des Fahrzeugs beim Laden des Fahrzeugs durch weitere Verbraucher belastet werden kann.

Es ist dabei nicht vorhersehbar, ob und wann ein Verbraucher neben dem Fahrzeug auf demselben Stromkreis zugeschaltet wird. Wenn bei Zuschalten eines Verbrauchers in dem Stromkreis die Überstromsicherung anspricht, trennt die Überstromsicherung in der Hausinstallation den Stromkreis auf, so dass die Stromversorgung ausfällt und das Laden unterbrochen wird. In umgekehrter Weise kann auch vor Belastung des Stromkreises durch das Elektrofahrzeug bereits eine Belastung des Stromkreises durch einen Verbraucher oder mehrere Verbraucher vorliegen, so dass bei Zuschalten des Elektrofahrzeugs in den Stromkreis zum Laden des Kraftfahrzeugs die Überstromsicherung anspricht und den Stromkreis sofort auftrennt.

Wird die Trennung an der Überstromsicherung beispielsweise durch Rückstellen eines Leistungsschutzschalters vom Benutzer manuell rückgängig gemacht, wird das Fahrzeug automatisch erneut versuchen mit dem gleichen Ladestrom wie vor dem Ausfall der Stromversorgung das Fahrzeug zu laden und die Überstromsicherung wird erneut den Stromkreis auftrennen. Dieses wiederholte Auslösen der Überstromsicherung in der Hausinstallation kann auf Dauer zu Schädigungen der Elektroinstallation führen. Außerdem bedeutet dies für den Nutzer des Elektrofahrzeugs, dass sein Fahrzeug nicht geladen werden kann, solange der Nutzer keine Veränderung der Belastung des Stromkreises durchführt, beispielsweise durch Entfernen eines Verbrauchers aus dem Stromkreis.

Aus der den nächstliegenden Stand der Technik bildenden Druckschrift EP 2 511 125 A2 ist eine Ladegerät zum Laden eines Elektrofahrzeugs bekannt, bei dem im Fall des Ausfalls der Stromversorgung der Ladestrom mit Zeitverzögerung wieder eingeschaltet wird, um den Einschaltstrom zu begrenzen.

Die Druckschrift US 2012/0139490 A1 beschreibt ein Verfahren zum Laden eines Elektrofahrzeugs, wobei der Ladestrom anhand von dem detektierten Ladekabelwiderstand reduziert wird.

Aus der Druckschrift WO 2011/155206 A1 ist ein Verfahren zum Laden bekannt, wobei der Ladestrom ausgeschaltet oder reduziert wird, wenn das Ladekabel nicht einer bestimmten Norm entspricht.

Die Druckschrift EP 2 518 852 A2 beschreibt ein Verfahren zum Laden eines Elektrofahrzeugs, bei dem der Wert des Ladestroms anhand des verfügbaren Ladestroms gesteuert wird.

Es ist Aufgabe der Erfindung, die vorstehend beschriebenen Nachteile auszuräumen.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Laden eines elektrischen Energiespeichers eines Elektrofahrzeugs an einer zur Stromversorgung dienenden Steckdose. Das Verfahren wird vorzugsweise zum Laden an einer Haushaltssteckdose, beispielsweise an einer 1-phasigen 230-V- oder 120-V-Haushaltssteckdose, verwendet, da bei Haushaltssteckdosen die Überstromsicherung bereits bei geringen Ladeströmen anspricht, beispielsweise ab ca. 14 A Dauerstrom (eine Sicherung mit 16 A Nominalwert kann bereits schon ca. 10 % unter halb ihres Normalwerts auslösen, wenn eine Dauerlast besteht) . Grundsätzlich könnte die Erfindung aber auch beim Laden an höher abgesicherten Industriesteckdosen verwendet werden.

Der Energiespeicher des Fahrzeugs wird beispielsweise schon über einen gewissen Zeitraum geladen und durch Zuschalten eines weiteren Verbrauchers wird eine Überstromsicherung ausgelöst, so dass es zu einem Ausfall der Stromversorgung kommt. Alternativ wird beispielsweise unmittelbar nach Ladestart eine Überstromsicherung ausgelöst, wenn beispielsweise der Stromkreis bereits durch einen oder mehrere Verbraucher belastet war.

Gemäß dem erfindungsgemäßen Verfahren wird nach Ausfall der Stromversorgung und anschließendem Wiedereinsetzen der Stromversorgung ein Ladestrom zum Laden des elektrischen Energiespeichers verwendet, der gegenüber dem Ladestrom vor Ausfall der Stromversorgung automatisch reduziert ist, beispielsweise um 10% oder mehr.

Erfindungsgemäß wird also eine automatische Ladestromreduzierung nach einem plötzlichen Ausfall der Stromversorgung vorgeschlagen. Wenn der Ladevorgang nach dem Wiedereinsetzen der Stromversorgung wieder gestartet wird, so lädt das Fahrzeug mit reduziertem Ladestrom.

Durch das erfindungsgemäße Verfahren kann ein Ladevorgang nach Ansprechen und anschließendem Rücksetzen der Überstromsicherung in der Hausinstallation fortgesetzt werden, ohne dass die Überstromsicherung erneut auslöst. Der Ladevorgang kann dabei nach Wiedereinsetzen der Stromversorgung vom Fahrzeug automatisch ohne weiteres Zutun des Benutzers fortgesetzt werden. Eine Schädigung der Hauselektroinstallation durch wiederholtes Auslösen der Überstromsicherung in der Hauselektroinstallation wird vermieden. Außerdem ermöglicht die Erfindung ein Laden an einem durch andere elektrische Verbraucher belasteten Stromkreis oder an einem schwach abgesicherten Stromkreis, ohne dass der Benutzer eine Veränderung in der Belastung des Stromkreises durchführen muss, beispielsweise durch Entfernen eines Verbrauchers aus dem Stromkreis. Ein Nutzer, der sich nicht mit der Stromtragfähigkeit der Hausinstallation oder etwaiger Ladestromeinstellungen beschäftigen will, wird unterstützt, da der Ladestrom automatisch angepasst wird.

Darüber hinaus vermindert das erfindungsgemäße Verfahren die verstärkte Abnutzung von Haushaltssteckdosen und des Steckers der Ladeleitungsgarnitur, die entsteht, wenn während des Ladevorgangs zuerst der Stecker der Ladeleitungsgarnitur an der Steckdose und nicht die Fahrzeugkupplung der Ladeleitungsgarnitur vom Stromanschluss des Fahrzeugs abgezogen wird. Das Abziehen des Steckers von der Steckdose kann als Ausfall der Stromversorgung interpretiert werden, so dass für einen späteren Ladeprozess ein reduzierter Ladestrom verwendet wird. Um eine Reduktion des Ladestroms zu verhindern, wird der Nutzer die Fahrzeugkupplung der Ladeleitungsgarnitur zuerst lösen, wobei dies im Allgemeinen nur möglich ist, wenn eine Entriegelung betätigt wird, die gleichzeitig das Laden beendet, so dass die Stromversorgungskontakte der Fahrzeugkupplung der Ladeleitungsgarnitur beim Lösen im Wesentlichen stromlos sind.

Vorzugsweise wird vor Ausfall der Stromversorgung und nach Wiedersetzen der Stromversorgung der Ladestrom jeweils nach oben durch eine aktive Ladestromgrenze begrenzt. Das erfindungsgemäße Verfahren sieht hierbei vor, dass die aktive Ladestromgrenze nach Wiedereinsetzen der Stromversorgung kleiner als die aktive Ladestromgrenze vor Ausfall der Stromversorgung ist, insbesondere um mindestens 10 % kleiner. Die aktive Ladestromgrenze wird beispielsweise von ungefähr 13 A auf ungefähr 10 A reduziert.

Der Mechanismus zur automatischen Ladestromreduzierung kann beispielsweise im Fahrzeug oder alternativ in dem ladeleitungsintegrierten Steuergerät der Ladeleitungsgarnitur umgesetzt werden.

Bei einer Ausführungsform des erfindungsgemäßen Verfahrens wird der Mechanismus zur Ladestromreduzierung im Fahrzeug umgesetzt, d. h. die Reduktion des Ladestroms wird seitens des Fahrzeugs hervorgerufen. Hierzu ist vorgesehen, dass vor Ausfall der Stromversorgung im Fahrzeug eine variable Ladestromgrenze zur Begrenzung des Ladestroms nach oben für das Laden an Haushaltssteckdosen vorliegt. Die variable Ladestromgrenze kann beispielsweise vom Nutzer über eine Bedienelement im Fahrzeug verändert werden und entspricht beispielsweise einem definierten Anteil des über das Pilotsignal kodierten maximalen Ladestroms, beispielsweise eine variable Ladestromgrenze mit mehreren Stufen, beispielsweise drei Stufen mit 100 %, 75 % und 50 % des über das Pilotsignal kodierten maximalen Ladestroms. Falls beim Laden vor Ladeende ein Ausfall der Stromversorgung auftritt, reduziert das Fahrzeug automatisch die Ladestromgrenze, beispielsweise wird bei einer mehrstufig einstellbaren Ladestromgrenze die Ladestromgrenze um eine Stufe reduziert (beispielsweise von 100 % des maximalen Ladestroms auf 75 % des maximalen Ladestroms).

Nach Wiedereinsetzen der Stromversorgung wird dann der Ladevorgang mit reduziertem Ladestrom entsprechend der reduzierten Ladestromgrenze durchgeführt (sofern der Ladevorgang noch nicht beendet war).

Die reduzierte Ladestromgrenze kann im Fahrzeug gespeichert werden, so dass diese vorzugsweise nach Benutzung des Fahrzeugs bei einem neuen Ladevorgang (beispielsweise am nächsten Tag) zur Begrenzung des Ladestroms herangezogen wird.

Die Ladestromgrenze wird bei dieser Ausführungsform nach Ausfall der Stromversorgung vom Fahrzeug reduziert. Das Fahrzeug kann beispielsweise den Ausfall der Stromversorgung zum Auslösen der Reduktion der Ladestromgrenze erkennen und bei Erkennen des Ausfalls die Ladestromgrenze reduzieren. Der Ausfall der Stromversorgung kann beispielsweise an dem Vorliegen zweier Bedingungen festgemacht werden: Erstens liegt ein entsprechendes Signal im den Annäherungskontakt umfassenden Annäherungsstromkreis vor, welches eine bestehende Verbindung der Fahrzeugkopplung der Ladeleitungsgarnitur mit dem Fahrzeug anzeigt (es fließt beispielsweise ein bestimmter Strom über den Proximity-Widerstand am Annäherungskontakt). Zweitens wird vom Fahrzeug kein Pilotsignal mehr erkannt.

Die Reduktion der Ladestromgrenze kann wiederholt werden, auch mehrmals. So wird die Ladestromgrenze beispielsweise nach einem ersten Ausfall der Stromversorgung ein erstes Mal reduziert, nach Fortführung des Ladeprozesses und anschließendem zweiten Ausfall der Stromversorgung noch vor Beendigung des Ladeprozesses wird die Ladestromgrenze noch weiter reduziert. Außerdem wird eine aufgrund eines Ausfalls der Versorgung reduzierte Ladestromgrenze vorzugsweise auch bei einem neuen Ladeprozess (beispielsweise am nächsten Tag) verwendet. Ein Ausfall der Stromversorgung bei dem neuen Ladeprozess würde dann zu einer weiteren Reduktion der bereits reduzierten Ladestromgrenze führen.

Vorzugsweise verwendet das Fahrzeug eine im Fahrzeug vorliegende Ladestromgrenze zum Begrenzen des Ladestroms nur, wenn seitens des Fahrzeugs erkannt wird, dass das Fahrzeug an einer Haushaltssteckdose und nicht an einer Ladestation oder einer sogenannten Wallbox geladen wird. Hierzu wird beispielsweise geprüft, ob der verfügbare Ladestrom kleiner als oder kleiner gleich einem Schwellwert ist, beispielsweise kleiner gleich einem Schwellwert von ungefähr 15 A (der beispielhafte Schwellwert von 15 A ist vor dem Hintergrund sinnvoll, dass die verwendbaren Ladeleitungsgranituren für Haushaltssteckedose im Allgemeinen mit 12 A als verfügbaren Ladestrom kodiert sind). Dazu kann beispielsweise der durch das Pilotsignal kodierte maximale Ladestrom und optional die durch den Proximity-Widerstand definierte Strombelastbarkeit ausgewertet werden. Beispielsweise beachtet das Fahrzeug die Ladestromgrenze, sofern der über das Pilotsignal definierte maximale Ladestrom und die über den Proximity-Widerstand kodierte Strombelastbarkeit kleiner oder gleich einem Schwellwert von ungefähr 15 A sind, da dies auf das Laden an einer Haushaltssteckdose hindeutet.

Vorzugsweise wird eine bereits vorher reduzierte Ladestromgrenze bei einem erneuten Ladevorgang nicht zur Begrenzung des Ladestroms unter der Voraussetzung verwendet, wenn das Fahrzeug nicht an einer Haushaltssteckdose geladen wird (sondern beispielsweise an einer Ladestation oder einer sogenannten Wallbox). Hierzu wird beispielsweise geprüft, ob der verfügbare Ladestrom der Stromversorgung größer oder größer gleich einem Schwellwert ist, wobei dies insbesondere anhand des empfangenen Pilotsignals seitens des Fahrzeugs erkannt wird. Beispielsweise wird eine bereits in einem vorherigen Ladevorgang reduzierte Ladestromgrenze bei einem erneuten Ladevorgang ignoriert, sofern der über das Pilotsignal definierte maximale Ladestrom und optional auch der über den Proximity-Widerstand kodierte Strombelastbarkeit größer einem Schwellwert von beispielsweise ungefähr 15 A sind. In diesem Fall wird der Ladestrom durch eine aktive Ladestromgrenze begrenzt, die dem Minimum aus dem über das Pilotsignal definierten maximale Ladestrom und der über den Proximity-Widerstand kodierten Strombelastbarkeit entspricht.

Bei einer weiteren Ausführungsform des erfindungsgemäßen Verfahrens wird der Mechanismus zur Ladestromreduzierung nach einem Ausfall der Stromversorgung in dem ladeleitungsintegrierten Steuergerät der Ladeleitungsgarnitur umgesetzt, d. h. die Reduktion des Ladestroms wird seitens eines ladeleitungsintegrierten Steuergerät der Ladeleitungsgarnitur hervorgerufen.

Hierzu ist vorgesehen, dass vor Ausfall der Stromversorgung eine reduzierte Ladestromgrenze zur Begrenzung des Ladestroms in dem ladeleitungsintegrierten Steuergerät gespeichert wird, welcher gegenüber der aktiven Ladestromgrenze vor Ausfall der Stromversorgung des Kraftfahrzeugs reduziert ist. Es wird also eine Ladestromgrenze gespeichert, die geringer als die Ladestromgrenze ist, die bis zum Ausfall der Stromversorgung zum Begrenzen des Ladestroms nach oben verwendet wird. Nach Wiedereinsetzen der Stromversorgung wird dann die gespeicherte reduzierte Ladestromgrenze als aktive Ladestromgrenze zur Begrenzung des Ladestroms verwendet.

Der Hintergrund für das frühzeitige Abspeichern einer reduzierten Ladestromgrenze (beispielsweise noch bevor das Laden des Fahrzeugs beginnt) liegt darin, dass mit Ausfall der Stromversorgung das ladeleitungsintegrierte Steuergerät auch nicht mehr mit Strom versorgt wird (da es typischerweise keine eigene Stromversorgung ausweist) und somit auf den Ausfall nicht mehr durch Reduktion der Ladestromgrenze reagieren kann.

Die Ladestromgrenze wird vorzugsweise in nicht-flüchtiger Weise mittels eines nicht-flüchtigen Speichers in dem Steuergerät gespeichert, beispielsweise mit einem Flash-Speicher oder einem EEPROM (electrically erasable programmable read-only memory). Durch das nicht-flüchtige Speichern der Ladestromgrenze bleibt die gespeicherte Ladestromgrenze auf Dauer erhalten, also auch wenn der Stecker der Ladeleitung mit dem ladeleitungsintegrierten Steuergerät von der Haushaltssteckdose getrennt wird und damit nicht mehr mit Strom versorgt wird.

Eine reduzierte Ladestromgrenze wird vorzugsweise abgespeichert, nachdem das Fahrzeug die Bereitschaft zum Laden signalisiert und bevor das Laden des Fahrzeugs beginnt. Zum Signalisieren der Bereitschaft zum Laden wird gemäß IEC 61851-1:2010 ein Schalter im Ladeinterface des Fahrzeugs geschlossen, so dass der High-Pegel des Pilotsignals von +9 V auf +6 V abfällt. Dieser Pegelabfall kann seitens des Steuergeräts erkannt werden und dann eine reduzierte Ladestromgrenze abgespeichert werden, die dann nach Stromausfall und anschließendem Wiedereinsetzen der Stromversorgung zur Begrenzung des Ladestroms verwendet wird.

Der Ladevorgang wird mit einer aktiven Stromgrenze (beispielsweise 13 A) durchgeführt, die größer als die gespeicherte reduzierte Stromgrenze (beispielsweise 10 A) ist. Wenn der Ladevorgang beendet wird, ohne dass ein Netzspannungsausfall auftritt, dann wird die aktive Stromgrenze als Ladestromgrenze übernommen und in dem Steuergerät gespeichert. Hierbei wird die vorzugsweise vor Ladebeginn abgespeicherte reduzierte Ladestromgrenze überschrieben. Wenn aber während des Ladens ein Netzspannungsausfall auftritt, wird der Ladevorgang nach Wiederherstellung der Stromversorgung mir reduziertem Ladestrom vorgenommen, da nach einem Einschalten des Steuergeräts die abgespeicherte reduzierte Stromgrenze als aktive Stromgrenze übernommen wird.

Es ist von Vorteil, wenn die Ladestromgrenze über ein Bedienelement der Ladeleitungsgarnitur vom Benutzer einstellbar ist und diese bei Lösen der Ladeleitungsgarnitur von der Haushaltssteckdose beibehalten bleibt. Die eingestellte Ladestromgrenze wird als aktive Ladestromgrenze zur Begrenzung des Ladestroms beim Ladevorgang übernommen.

Ein zweiter Aspekt der Erfindung ist auf ein Elektrofahrzeug mit einem elektrischen Energiespeicher gerichtet, welcher über ein im Fahrzeug integriertes Ladegerät an einer zur Stromversorgung dienenden Haushaltssteckdose ladbar ist. Das Fahrzeug weist eine variable Ladestromgrenze zur Begrenzung des Ladestroms nach oben auf; die Ladestromgrenze ist vorzugsweise vom Nutzer veränderbar. Das Fahrzeug ist eingerichtet, die Ladestromgrenze nach Ausfall der Stromversorgung automatisch zu reduzieren.

Die vorstehenden Ausführungen zum erfindungsgemäßen Verfahren nach dem ersten Aspekt der Erfindung gelten in entsprechender Weise auch für das erfindungsgemäße Elektrofahrzeug nach dem zweiten Aspekt der Erfindung. An dieser Stelle nicht explizit beschriebene vorteilhafte Ausführungsbeispiele des erfindungsgemäßen Elektrofahrzeugs entsprechen den beschriebenen vorteilhaften Ausführungsbeispielen des erfindungsgemäßen Verfahrens.

Ein dritter Aspekt der Erfindung ist auf ein Steuergerät für eine Ladeleitungsgarnitur gerichtet. Das Steuergerät ist eingerichtet, bereits vor Ausfall der Stromversorgung eine reduzierte Ladestromgrenze zur Begrenzung des Ladestroms in insbesondere nicht-flüchtiger Weise zu speichern, welcher gegenüber einer zum Laden aktiven Ladestromgrenze zur Begrenzung des Ladestroms vor Ausfall der Stromversorgung reduziert ist, so dass für das Laden nach Wiedereinsetzen der Stromversorgung die gespeicherte reduzierte Ladestromgrenze zur Begrenzung des Ladestroms verwendet wird. Hierzu wird vorzugsweise die gespeicherte Stromgrenze als aktive Stromgrenze übernommen und dem Fahrzeug seitens des Steuergeräts über das Pilotsignal mitgeteilt

Die vorstehenden Ausführungen zum erfindungsgemäßen Verfahren nach dem ersten Aspekt der Erfindung gelten in entsprechender Weise auch für das Steuergerät nach dem dritten Aspekt der Erfindung. An dieser Stelle nicht explizit beschriebene vorteilhafte Ausführungsbeispiele des erfindungsgemäßen Steuergeräts entsprechen den beschriebenen vorteilhaften Ausführungsbeispielen des erfindungsgemäßen Verfahrens.

Die Erfindung wird nachfolgend unter Zuhilfenahme auf die beigefügten Zeichnungen anhand mehrerer Ausführungsbeispiele beschrieben. In diesen zeigen:
- Fig. 1: eine mit einem Elektrofahrzeug verbundene Ladeleitungsgarnitur zum Laden des Elektrofahrzeugs an einer Haushaltssteckdose;
- Fig. 2, Fig. 3: ein erstes Ausführungsbeispiel des erfindungsgemäßen Verfahrens, wobei die Reduktion des Ladestroms seitens des Fahrzeugs hervorgerufen wird; und
- Fig. 4, Fig. 5: ein zweites Ausführungsbeispiel des erfindungsgemäßen Verfahrens, wobei die Reduktion des Ladestroms seitens des ladeleitungsintegrierten Steuergeräts hervorgerufen wird.

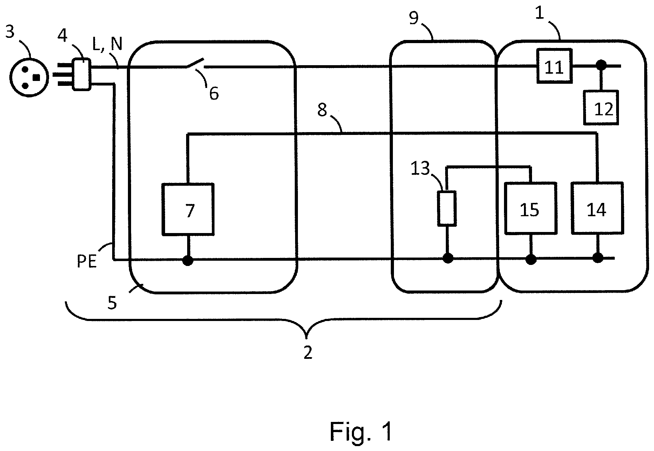

Fig. 1 zeigt in einer schematischen Darstellung eine mit einem Elektrofahrzeug 1 verbundene Ladeleitungsgarnitur 2 zum Laden des Elektrofahrzeugs 1 an einer 1-phasigen Haushaltssteckdose 3 mit beispielsweise 230-V- oder 120-V-Wechselspannung in Anlehnung an die Norm IEC 61851-1:2010. Die Haushaltssteckdose 3 ist über eine Überstromsicherung (beispielsweise ein 16-A-Leistungsschutzschalter, nicht dargestellt) abgesichert und an ein Wechselstromnetz angeschlossen. Die Ladeleitungsgarnitur 2 umfasst einen Stecker 4, der zum Laden mit der Steckdose 3 verbunden wird. Der Stecker 4 stellt einen Außenleiter (Phasenleiter) L, einen Neutralleiter N und einen Schutzleiter PE zur Verfügung. Die Ladeleitungsgarnitur 2 umfasst ferner ein ladeleitungsintegriertes Steuergerät 5. Das Steuergerät 5 umfasst einen Schalter 6 (typischerweise ein Schütz), um die Netzversorgung zum Laden des Fahrzeugs ein- oder auszuschalten. Ferner ist eine Steuerschaltung 7 vorgesehen, die ein pulsweitenmoduliertes (PWM) Pilotsignal generiert, das über einen Pilotleiter 8 an das Fahrzeug übertragen wird. Die Ladeleitungsgarnitur umfasst ferner eine Fahrzeugkupplung 9, die mit einem passenden Ladeanschluss des Elektrofahrzeugs 1 verbunden werden kann. Bei der Fahrzeugkupplung 9 handelt es sich typischerweise um einen Stecker. Die Fahrzeugkupplung 9 umfasst einen Proximity-Widerstand 13, dessen Wert die Strombelastbarkeit der Ladeleitungsgarnitur 2 angibt.

Zum Laden umfasst das Elektrofahrzeug 1 ein Ladegerät 11, welches den Wechselstrom in einen passenden Gleichstrom zum Laden eines elektrischen Energiespeichers 12 des Fahrzeugs 1 wandelt. Ferner umfasst das Elektrofahrzeug 1 eine Pilotschaltung 14 zum Empfang des Pilotsignals über den Pilotleiter 8. Darüber hinaus umfasst das Elektrofahrzeug 1 eine Schaltung 15, mit der eine Spannung auf den Proximity-Widerstand 13 geführt wird, damit das Fahrzeug 1 beispielsweise anhand des resultierenden Stroms die Strombelastbarkeit der Ladeleitungsgarnitur 2 feststellen kann.

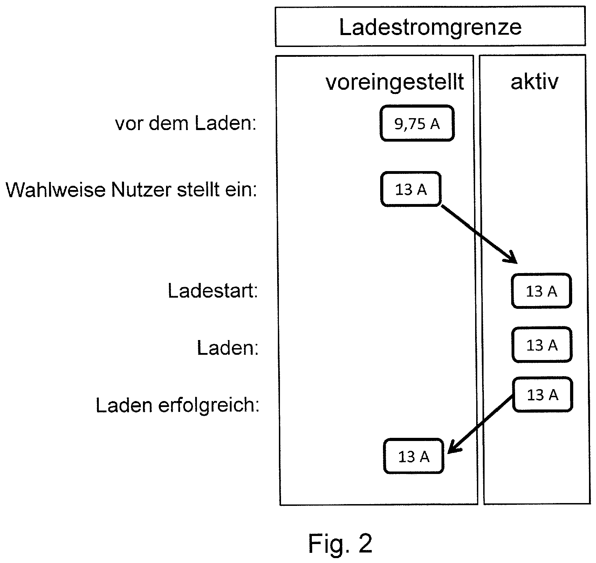

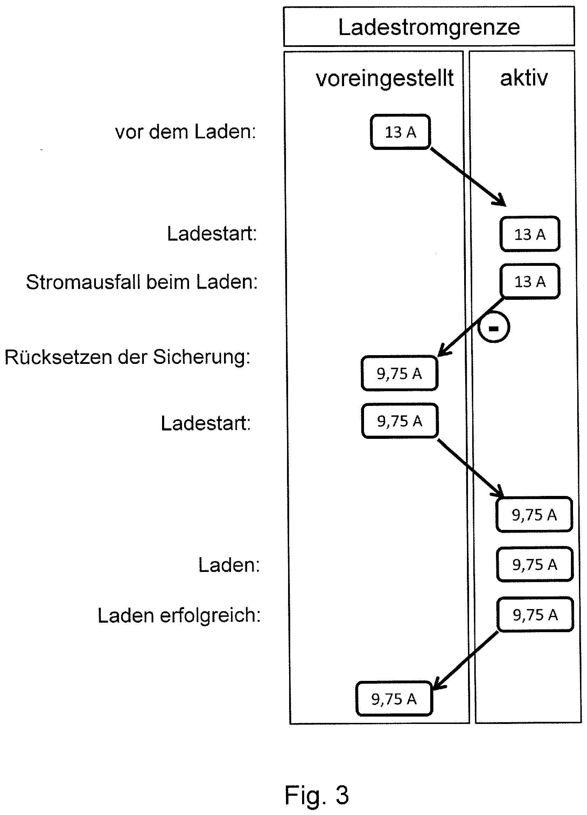

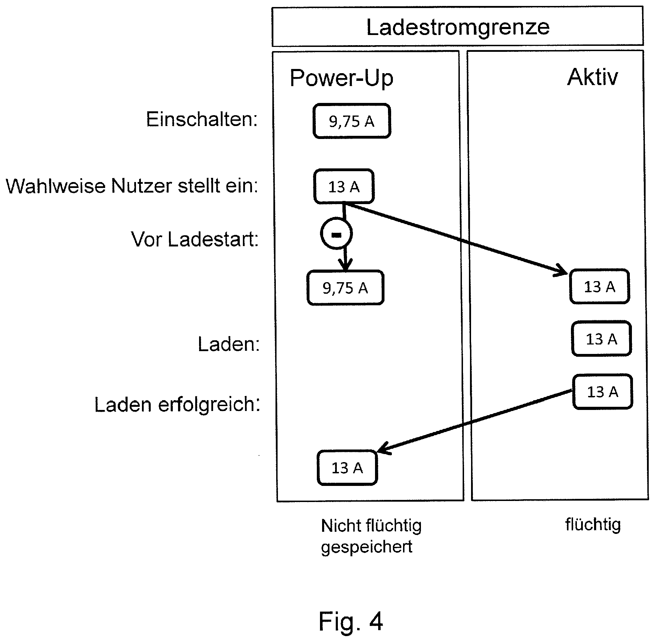

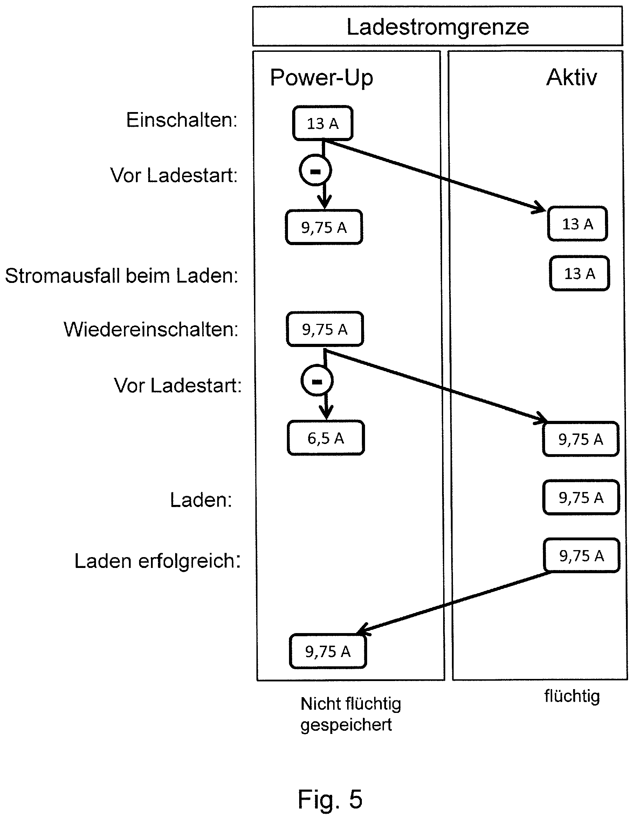

Erfindungsgemäß wird eine automatische Ladestromreduzierung nach einem plötzlichen Ausfall der Netzspannung vorgesehen. Wenn ein Ladevorgang nach einem Netzspannungsausfall fortgesetzt wird, lädt das Fahrzeug 1 mit reduziertem Ladestrom. Nachfolgend werden zwei Ausführungsformen zur Umsetzung dieses Verfahrens diskutiert. Bei dem anhand von Fig. 2 und 3 diskutierten ersten Ausführungsbeispiel wird die Reduktion des Ladestroms seitens des Fahrzeugs 1 hervorgerufen. Bei dem anhand von Fig. 4 und 5 diskutierten zweiten Ausführungsbeispiel wird die Reduktion des Ladestroms seitens des ladeleitungsintegrierten Steuergeräts 5 hervorgerufen.

Bei dem ersten Ausführungsbeispiel zur Umsetzung des Verfahrens im Fahrzeug 1 liegt im Fahrzeug eine variable voreingestellte Ladestromgrenze für das Laden an der Haushaltssteckdose 3 im Fahrzeug 1 vor, die im Fahrzeug gespeichert ist. Die variable Ladestromgrenze kann beispielsweise vom Nutzer über ein Bedienelement im Fahrzeug 1 verändert werden und entspricht beispielsweise einem definierten Anteil des über das Pilotsignal kodierten maximalen Ladestroms. Beispielsweise sind drei Stufen mit 100 %, 75 % und 50 % des über das Pilotsignal kodierten maximalen Ladestroms vorgesehen, wobei der voreingestellte Default-Wert der Ladestromgrenze bei Auslieferung des Fahrzeugs 1 beispielsweise 75% ist. Bei einem über das Pilotsignal kodierten maximalen Ladestrom von beispielsweise 13 A entspricht dies einer Ladestromgrenze von 9,75 A. Die voreingestellte Ladestromgrenze von 9,75 A vor dem Laden ist oben in der linken Spalte in Fig. 2 dargestellt.

Diese voreingestellte Ladestromgrenze kann wahlweise vom Nutzer verändert werden, beispielsweise auf 100 % des über das Pilotsignal kodierten maximalen Ladestroms erhöht werden, d. h. in diesem Fall auf 13 A (s. Fig .2). Das Fahrzeug verwendet den Stromwert (hier 13 A) der voreingestellte Ladestromgrenze als aktive Ladestromgrenze während des Ladevorgangs, sofern das Minimum aus der durch das Pilotsignal kodierten Stromgrenze und der durch den Proximity-Widerstand Stromtragfähigkeit kleiner oder gleich einem Schwellwert ist, beispielsweise 15 A. In dem Fall wird vom Fahrzeug 1 ein Laden an einer Haushaltssteckdose angenommen. In der rechten Spalte in Fig. 2 wird die vom Nutzer voreingestellte Ladestromgrenze 13 A als aktive Ladestromgrenze übernommen, da die voreingestellte Ladestromgrenze kleiner als der Schwellwert von beispielsweise 15 A ist. Beim Laden wird dann die aktive Ladestromgrenze von beispielsweise 13 A zur Begrenzung des Ladestroms verwendet. Sofern das Laden mit der aktiven Ladestromgrenze ohne Ausfall der Stromversorgung erfolgreich verlaufen ist, wird die aktive Ladestromgrenze von beispielsweise 13 A als voreingestellte Ladestromgrenze übernommen. Hierzu wird beispielsweise ein Wert von 100 % für die voreingestellte Ladestromgrenze im Fahrzeug abgespeichert.

Fig. 3 zeigt die Situation bei einem erneuten Ladevorgang für den Fall, dass vor Ladeende ein Ausfall der Stromversorgung auftritt. Eine voreingestellte Ladestromgrenze von beispielsweise 13 A (=100 %) wird als aktive Ladestromgrenze zum Laden des Fahrzeugs verwendet. Es kommt anschießend mit der aktiven Ladestromgrenze von 13 A zu einem Stromausfall beim Laden, beispielsweise weil die Überstromsicherung der Steckdose 3 die Steckdose 3 spannungslos geschaltet hat.

Falls beim Laden vor Ladeende ein Netzspannungsausfall auftritt, reduziert das Fahrzeug sofort nach Erkennen des Stromausfalls die voreingestellte Stromgrenze, indem es diese beispielsweise eine Stufe zurückstellt, d. h. von 100 % = 13 A auf 75 % = 9,75 A. Diese Reduktion ist in Fig. 3 durch das eingekreiste Minus-Zeichen dargestellt. Der Stromausfall kann beispielsweise dadurch erkannt werden, dass ein Strom über den Proximity-Widerstand fließt und (gleichzeitig) das Fahrzeug kein Pilotsignal mehr empfängt. Nach Rücksetzen der Sicherung mit Wiederherstellung der Stromversorgung zur Steckdose liegt dann in dem Beispiel eine voreingestellte Ladestromgrenze von 75 % = 9,75 A vor, die mit Ladestart als aktive Ladestromgrenze zur Begrenzung des Ladestroms verwendet wird. Nach Rücksetzen der Überstromsicherung erkannt das Fahrzeug, dass die Stromversorgung wieder vorliegt (beispielsweise daran, dass ein Strom über den Proximity-Widerstand fließt und das Fahrzeug ein Pilotsignal empfängt). Wenn das Vorliegen der Stromversorgung erkannt wird und der Ladevorgang noch nicht beendet ist (d. h. das Ladeziel noch nicht erreicht wurde), wird der Ladeprozess mit reduziertem Ladestrom entsprechend der reduzierten Ladestromgrenze automatisch ohne weiteres Zutun des Benutzers fortgeführt. Dazu wird die reduzierte voreingestellte Ladestromgrenze mit Ladestart als aktive Ladestromgrenze zur Begrenzung des Ladestroms für den anschließenden Ladevorgang übernommen. Sofern das Laden mit der geringeren aktiven Ladestromgrenze (hier 9,75 A) ohne Ausfall der Stromversorgung erfolgreich verlaufen ist, wird die geringere aktive Ladestromgrenze von beispielsweise 9,75 A als voreingestellte Ladestromgrenze übernommen. Hierzu wird beispielsweise ein reduzierter Wert von beispielsweise 75 % für die voreingestellte Ladestromgrenze im Fahrzeug abgespeichert.

Dieser Mechanismus der Reduktion der Ladestromgrenze ist mehrfach wiederholbar. So wird die Ladestromgrenze beispielsweise nach einem ersten Ausfall der Stromversorgung ein erstes Mal reduziert; nach anschließendem zweiten Ausfall der Stromversorgung noch vor Beendigung des Ladeprozesses wird die Ladestromgrenze noch weiter reduziert. Außerdem wird eine aufgrund eines Ausfalls der Versorgung reduzierte Ladestromgrenze vorzugsweise auch bei einem neuen Ladeprozess (beispielsweise am nächsten Tag) verwendet. Ein Ausfall der Stromversorgung bei dem neuen Ladeprozess würde dann zu einer weiteren Reduktion der bereits reduzierten Ladestromgrenze führen.

Bei Ladebeginn und bei jeder Änderung des Pulsweitenverhältnisses im Pilotsignal wird vorzugsweise jedes Mal der maximale Stromwert aus der voreingestellten Ladestromgrenze neu bestimmt, der dann anschließend als Stromwert für die aktiven Ladestromgrenze verwendet werden kann.

Sofern das Minimum aus der durch das Pilotsignal kodierten Stromgrenze und der durch den Proximity-Widerstand kodierten Stromtragfähigkeit den Schwellwert von hier 15 A überschreitet, kann die Ladestromgrenze ignoriert werden und das Fahrzeug zieht als aktive Stromgrenze dann das Minimum aus der durch das Pilotsignal kodierten Stromgrenze und der durch den Proximity-Widerstand kodierten Stromtragfähigkeit heran. Dadurch wird erreicht, dass der Mechanismus nur beim Laden über eine Ladeleitungsgarnitur an einer Haushaltssteckdose verwendet wird (die Ladeleitungsgarnituren für Haushaltssteckdosen sind typischerweise nur bis 12 A kodiert) und nicht bei Ladestationen und Wallboxen, die 16A und mehr unterstützen.

Anhand von Fig. 4 und Fig. 5 wird nachfolgend ein zweites Ausführungsbeispiel des erfindungsgemäßen Verfahrens beschrieben, bei dem die Reduktion des Ladestroms seitens des ladeleitungsintegrierten Steuergeräts 5 hervorgerufen wird.

Die Ladeleitungsgarnitur 2, insbesondere das ladeleitungsintegrierte Steuergerät 5, verfügt bei diesem Ausführungsbeispiel über ein Bedienelement an dem der Benutzer eine gewünschte Ladestromgrenze einstellen kann. Beispielsweise gibt es hierfür drei verschiedene Einstellungen für die gewünschte Ladestromgrenze, beispielsweise mit 100 %, 75 % und 50 % des anhand des Pilotsignals kodierten maximalen Ladestroms (hier beispielsweise 13 A). In dem ladeleitungsintegrierten Steuergeräts 5 ist eine voreingestellten Power-Up-Ladestromgrenze gespeichert, die nach Einschalten des Steuergeräts 5 zur Verfügung steht (beispielsweise bei Versorgen des ladeleitungsintegrierten Steuergeräts 5 mit Spannung, wenn der Stecker 4 in die Steckdose 3 gesteckt wird). Die Power-Up-Ladestromgrenze wird nicht-flüchtig in dem ladeleitungsintegrierten Steuergerät 5 gespeichert, beispielsweise in einem Flash-Speicher oder in einem EEPROM. Die Power-Up-Ladestromgrenze ist in der linken Spalte von Fig. 4 dargestellt.

Nach dem Einschalten des ladeleitungsintegrierten Steuergeräts 5 wird die abgespeicherte Power-Up-Ladestromgrenze bei Ladestart als aktive Stromgrenze eingestellt, sofern der Benutzer den Ladestrom nicht ändert. Der Benutzer kann nach dem Einschalten des ladeleitungsintegrierten Steuergeräts 5 (zum Beispiel durch Anstecken der Ladeleitungsgarnitur 2 an der Haushaltssteckdose 3) und vor Beginn des Ladevorgangs (d.h. vor Anstecken der Ladeleitungsgarnitur 2 am Fahrzeug1) die Stromgrenze am Bedienelement einstellen (beispielsweise 13 A = 100 % in Fig. 4). Die eingestellte Stromgrenze wird nicht-flüchtig als Power-Up-Ladestromgrenze gespeichert und auch als aktive Ladestromgrenze übernommen. Sobald das Fahrzeug 1 die Bereitschaft zum Laden signalisiert (beispielsweise wenn der High-Pegel des Pilotsignals von 9V auf 6V wechselt), wird eine reduzierte Stromgrenze als Power-Up-Stromgrenze in nicht-flüchtiger Weise gespeichert (in Fig. 4 eine Power-Up-Stromgrenze von 9,75 A = 75 % statt der vorher eingestellten 13 A = 100 %). Die gespeicherte Power-Up-Ladestromgrenze ist gegenüber der bisherigen Power-Up-Ladestromgrenze (hier 13 A = 100 %) um beispielsweise eine Stufe reduziert, wobei die bisherige Power-Up-Ladestromgrenze der bei Ladebeginn verwendeten aktiven Ladestromgrenze (hier 13 A = 100 %) entspricht.

Danach schaltet das ladeleitungsintegrierte Steuergerät 5 durch Schließen des Schützes 4 die Netzspannung zum Fahrzeug 1 durch. Der anstehende Ladevorgang wird mit der aktiven Ladestromgrenze (13 A in Fig. 4) durchgeführt. Wenn der Ladevorgang beendet wird, ohne dass ein Netzspannungsausfall auftritt, wird die aktive Stromgrenze als Power-Up-Stromgrenze übernommen und in nicht-flüchtiger Weise gespeichert. Fig. 5 zeigt den Fall, dass während des Ladens ein Netzspannungsausfall auftritt. Die Power-Up-Ladestromgrenze wird - wie vorstehend beschrieben - vor Ladestart reduziert (beispielsweise um eine Stufe) und der reduzierte Wert in nicht-flüchtiger Weise gespeichert. Wenn es dann zu einem Stromausfall mit der aktiven Ladestromgrenze (hier 13 A) kommt, liegt bei Wiedereinschalten des ladeleitungsintegrierten Steuergeräts 5 (nachdem der Nutzer die Überstromsicherung zurücksetzt und das Steuergerät 5 wieder mit Spannung versorgt wird) der abgespeicherte reduzierte Wert für die Power-Up-Ladestromgrenze vor. Vor Ladestart wird eine noch weiter reduzierte Stromgrenze (hier: 6,5 A = 50 %) als Power-Up-Stromgrenze in nicht-flüchtiger Weise gespeichert, die um eine Stufe gegenüber der vor Stromausfall gespeicherten reduzierten Power-Up-Stromgrenze weiter reduziert ist. Nach Rücksetzen der Sicherung und Speichern der reduzierten Ladestromgrenzen, startet der Ladevorgang wieder automatisch, wobei dieser Ladevorgang mir reduziertem Ladestrom vorgenommen wird, da nach dem Wiedereinschalten des Steuergeräts 5 die Power-Up-Ladestromgrenze als aktive Stromgrenze übernommen wird.

Bei wiederholten Netzspannungsausfällen kann die Power-Up-Ladestromgrenze jeweils pro Netzspannungsausfall um eine Stufe reduziert werden.

Der vorstehend in Zusammenhang mit Fig. 4 und Fig. 5 beschriebene Mechanismus bewirkt, dass bei einem Laden ohne Netzspannungsausfall die verwendete Power-Up-Ladestromgrenze auch für folgende Ladevorgänge verwendet wird. Wenn aber ein Netzspannungsausfall auftritt, wird die Power-Up-Ladestromgrenze reduziert, so dass bei weiteren Ladevorgängen an derselben Steckdose kein Eingriff des Benutzers erforderlich ist.

Optional kann vorgesehen sein, dass die beiden vorstehend beschriebenen Ausführungsbeispiele dahingehend erweitert sind, dass als weiterer Trigger zur Ladestromreduzierung das Erkennen einer Übertemperatur im Stecker 4 zur Haushaltssteckdose 3 verwendet wird, wenn die Ladeleitungsgarnitur 2 mit einem entsprechenden Temperatursensor ausgerüstet ist. In diesem Fall wird nach Erkennen einer Übertemperatur, d. h. bei Erreichen oder Überschreiten einer Grenztemperatur, eine reduzierte Ladestromgrenze für nachfolgende Ladevorgänge gespeichert. Hierdurch wird eine Schädigung der Hauselektroinstallation durch wiederholtes Laden bei Ladeströmen, die zu einer zu starken Temperaturerhöhung führen, vermieden.

## Patentansprüche

1. Verfahren zum Laden eines elektrischen Energiespeichers (12) eines Elektrofahrzeugs (1) an einer zur Stromversorgung dienenden Steckdose (3), wobei nach Ausfall der Stromversorgung und anschließendem Wiedereinsetzen der Stromversorgung ein Ladestrom zum Laden des elektrischen Energiespeichers (12) verwendet wird,
**dadurch gekennzeichnet, dass**
der Ladestrom nach anschließendem Wiedereinsetzen der Stromversorgung gegenüber dem Ladestrom vor Ausfall der Stromversorgung automatisch reduziert ist.

2. Verfahren nach Anspruch 1, wobei vor Ausfall der Stromversorgung und nach Wiedersetzen der Stromversorgung der Ladestrom jeweils nach oben durch eine aktive Ladestromgrenze begrenzt wird und die aktive Ladestromgrenze nach Wiedereinsetzen der Stromversorgung kleiner als die aktive Ladestromgrenze vor Ausfall der Stromversorgung ist, insbesondere um mindestens 10 % kleiner.

3. Verfahren nach einem der vorhergehenden Ansprüche, wobei die Reduktion des Ladestroms seitens des Fahrzeugs (1) hervorgerufen wird, indem
- vor Ausfall der Stromversorgung im Fahrzeug (1) eine variable Ladestromgrenze zur Begrenzung des Ladestroms nach oben vorliegt, und
- die Ladestromgrenze seitens des Fahrzeugs (1) nach Ausfall der Stromversorgung automatisch reduziert wird.

4. Verfahren nach Anspruch 3, wobei die reduzierte Ladestromgrenze bei einem erneuten Ladevorgang nicht zur Begrenzung des Ladestroms unter der Voraussetzung verwendet wird, wenn der verfügbare Ladestrom der Stromversorgung größer oder größer gleich einem bestimmten Schwellwert ist, wobei dies insbesondere anhand eines empfangenen Pilotsignals seitens des Fahrzeugs (1) erkannt wird.

5. Verfahren nach einem der vorhergehenden Ansprüche, wobei die Reduktion des Ladestroms seitens eines ladeleitungsintegrierten Steuergeräts (5) der Ladeleitungsgarnitur (2) hervorgerufen wird, indem
- bereits vor Ausfall der Stromversorgung eine reduzierte Ladestromgrenze in der Stromversorgungseinrichtung abgespeichert wird, und
- nach Wiedereinsetzen der Stromversorgung die gespeicherte reduzierte Ladestromgrenze zur Begrenzung des Ladestroms verwendet wird.

6. Verfahren nach Anspruch 5, wobei die reduzierte Ladestromgrenze gespeichert wird, nachdem das Fahrzeug (1) die Bereitschaft zum Laden signalisiert und bevor das Laden des Fahrzeugs (1) beginnt.

7. Verfahren nach einem der Ansprüche 5-6, wobei die aktive Ladestromgrenze für das Laden des Kraftfahrzeugs (1) als Ladestromgrenze übernommen und in dem Steuergerät (5) gespeichert wird, sofern das Laden ohne Ausfall der Stromversorgung beendet wird.

8. Verfahren nach einem der Ansprüche 5-7, wobei eine Ladestromgrenze über ein Bedienelement der Ladeleitungsgarnitur (2) einstellbar ist und diese bei Lösen der Ladeleitungsgarnitur von der Steckdose (3) erhalten bleibt.

9. Verfahren nach einem der vorhergehenden Ansprüche, wobei die Steckdose (3) eine 1-phasige 230-V- oder 120-V-Haushaltssteckdose ist.

10. Elektrofahrzeug (1) mit einem elektrischen Energiespeicher (12), welcher an einer zur Stromversorgung dienenden Steckdose (3) ladbar ist,
**dadurch gekennzeichnet, dass** das Fahrzeug (1) eine variable Ladestromgrenze zur Begrenzung des Ladestroms nach oben aufweist, und das Fahrzeug (1) eingerichtet ist, die Ladestromgrenze nach Ausfall der Stromversorgung automatisch zu reduzieren.

11. Steuergerät (5) für eine Ladeleitungsgarnitur (2) zum Laden eines Elektrofahrzeugs (1) an einer Steckdose (3),
**dadurch gekennzeichnet, dass** das Steuergerät (5) eingerichtet ist, bereits vor Ausfall der Stromversorgung eine reduzierte Ladestromgrenze zur Begrenzung des Ladestroms abspeichern, so dass für das Laden nach Wiedereinsetzen der Stromversorgung die gespeicherte reduzierte Ladestromgrenze zur Begrenzung des Ladestroms verwendet wird.

## Claims

1. A method for charging an electrical energy storage device (12) of an electric vehicle (1) at a power socket (3) which serves as the power supply, wherein following the failure of the power supply and the subsequent restoration of the power supply, a charging current for charging the electrical energy storage device (12) is used, **characterised in that** the charging current after subsequently restoring the power supply is a charging current, which is automatically reduced compared to the charging current before the failure of the power supply.

2. A method according to claim 1, wherein before the failure of the power supply and after the restoration of the power supply, the charging current is respectively limited upwards by an active charging current limit and, following the restoration of the power supply, the active charging current limit is lower than the active charging current limit before the failure of the power supply, in particular by at least 10 %.

3. A method according to either of the preceding claims, wherein the reduction of the charging current is induced by the vehicle (1), in that
- before the failure of the power supply, a variable charging current limit for upwardly limiting the charging current is present in the vehicle (1), and
- following the failure of the power supply, the charging current limit is automatically reduced by the vehicle (1).

4. A method according to claim 3, wherein the reduced charging current limit is not used for a renewed charging procedure to limit the charging current, provided that the available charging current of the power supply is greater than or equal to a particular threshold value, wherein this is detected by the vehicle (1) more especially based on a received pilot signal.

5. A method according to any one of the preceding claims, wherein the reduction in the charging current is induced by a charge line-integrated control device (5) of the charge line fitting (2), in that
- before the failure of the power supply, a reduced charging current limit is saved in the power supply device, and
- following the restoration of the power supply, the stored reduced charging current limit is used to limit the charging current.

6. A method according to claim 5, wherein the reduced charging current limit is stored after the vehicle (1) indicates that it is ready for charging and before charging of the vehicle (1) commences.

7. A method according to either one of claims 5 and 6, wherein the active charging current limit is adopted as the charging current limit for charging the motor vehicle (1) and is stored in the control device (5), provided that the charging procedure ends without the failure of the power supply.

8. A method according to any one of claims 5 to 7, wherein a charging current limit can be adjusted by an operating element of the charge line fitting (2) and this limit is retained when the charge line fitting is removed from the power socket (3).

9. A method according to any one of the preceding claims, wherein the power socket (3) is a single phase 230 V or 120 V domestic power socket.

10. An electric vehicle (1) having an electrical energy storage device (12) which can be charged at a power socket (3) which serves as the power supply, **characterised in that** the vehicle (1) has a variable charging current limit for upwardly limiting the charging current, and the vehicle (1) is configured to automatically reduce the charging current limit following the failure of the power supply.

11. A control device (5) for a charge line fitting (2) for charging an electric vehicle (1) at a power socket (3), **characterised in that** the control device (5) is configured to save a reduced charging current limit for limiting the charging current before the failure of the power supply, so that the stored reduced charging current limit is used to limit the charging current for the charging procedure following the restoration of the power supply.

## Revendications

1. Procédé de charge d'un accumulateur d'énergie électrique (12) d'un véhicule électrique (1) sur une prise de courant (3) servant d'élément d'alimentation en courant, selon lequel en cas de coupure de l'alimentation en courant puis de reprise de celle-ci, on utilise un courant de charge pour charger l'accumulateur d'énergie électrique (12), **caractérisé en ce que**
le courant de charge après reprise ultérieure de l'alimentation en courant, est un courant de charge qui est automatiquement réduit par rapport au courant de charge avant la coupure de l'alimentation en courant.

2. Procédé conforme à la revendication 1,
selon lequel
avant la coupure de l'alimentation en courant et après la reprise de cette alimentation en courant, le courant de charge est respectivement limité vers le haut par une limite de courant de charge active et la limite du courant de charge active après la reprise de l'alimentation en courant est inférieure à la limite du courant de charge active avant la coupure de l'alimentation en courant, en particulier inférieure d'au moins 10 %.

3. Procédé conforme à l'une des revendications précédentes,
selon lequel
la réduction du courant de charge est provoquée du côté du véhicule, de sorte que :
- avant la coupure de l'alimentation en courant il y ait dans le véhicule (1), une limite du courant de charge variable pour limiter le courant de charge vers le haut, et que
- la limite du courant de charge soit réduite automatiquement du côté du véhicule (1) après la coupure de l'alimentation en courant.

4. Procédé conforme à la revendication 3,
selon lequel
lors d'un nouveau processus de charge, la limite du courant de charge réduite n'est pas utilisée pour limiter le courant de charge si le courant de charge disponible de l'alimentation en courant soit supérieur ou du même ordre qu'une valeur de seuil prédéfinie, cette situation étant en particulier identifiée sur le fondement d'un signal pilote reçu du côté du véhicule (1).

5. Procédé conforme à l'une des revendications précédentes,
selon lequel
la réduction du courant de charge est provoquée du côté d'un appareil de commande (5) intégré au câble de charge de l'équipement du câble de charge (2), de sorte que :
- une limite de courant de charge réduite soit enregistrée dans le dispositif d'alimentation en courant déjà avant la coupure de l'alimentation en courant, et que
- la limite du courant de charge réduite enregistrée soit utilisée après la reprise de l'alimentation en courant pour limiter le courant de charge.

6. Procédé conforme à la revendication 5,
selon lequel
la limite du courant de charge réduite est enregistrée après que le véhicule (1) se soit déclaré prêt à la charge et avant que la charge du véhicule (1) n'ait commencé.

7. Procédé conforme à l'une des revendications 5 et 6,
selon lequel
la limite du courant de charge active pour la charge du véhicule (1) est acceptée en tant que limite du courant de charge et enregistrée dans l'appareil de commande (5) dans la mesure où la charge se termine sans coupure de l'alimentation en courant.

8. Procédé conforme à l'une des revendications 5 à 7,
selon lequel
la limite du courant de charge peut être réglée à l'aide d'un élément de manoeuvre de l'équipement (2) du câble de charge, et est maintenue lors de la séparation de l'équipement du câble de charge et de la prise (3).

9. Procédé conforme à l'une des revendications précédentes,
selon lequel
la prise de courant (3) est une prise de courant commerciale 120 volts ou 220 volts monophasée.

10. Véhicule électrique (1) comprenant un accumulateur d'énergie électrique (12) susceptible d'être chargé sur une prise de courant (3) servant d'élément d'alimentation en courant,
**caractérisé en ce que**
le véhicule (1) a une limite du courant de charge variable pour limiter le courant de charge vers le haut et le véhicule (1) est susceptible de réduire automatiquement la limite du courant de charge après une coupure de l'alimentation en courant.

11. Appareil de commande (5) pour un équipement de câble de charge (2) pour permettre la charge d'un véhicule électrique (1) sur une prise de courant (3)
**caractérisé en ce que**
l'appareil de mesure est susceptible d'enregistrer, une limite du courant de charge réduite déjà avant une coupure de l'alimentation, pour permettre de limiter le courant de charge, de sorte que, la limite de courant de charge réduire enregistrée soit utilisée pour la charge après la reprise de l'alimentation en courant de façon à limiter le courant de charge.
